# EUROPEAN PATENT SPECIFICATION

(11) **EP 4 289 544 B1**
(45) Date of publication and mention of the grant of the patent: **16.10.2024**
(21) Application number: 22211626.1
(22) Date of filing: 06.12.2022
(51) Int. Cl.: B23K 11/36, B23K 37/04, B23K 37/047, H01M 10/04

(54) **SYSTEM AND METHOD FOR WELDING A BATTERY MODULE ASSEMBLY**
SYSTEM UND VERFAHREN ZUM SCHWEISSEN EINE BATTERIEMODULEINHEIT
SYSTÈME ET PROCÉDÉ DE SOUDAGE D'UN ENSEMBLE DE MODULE DE BATTERIE

(30) Priority: 10.05.2022 KR 20220057329
(43) Date of publication of application: 13.12.2023
(73) Proprietor: Hyundai Motor Company, Seoul 137-938 (KR); Kia Corporation, Seocho-gu Seoul 06797 (KR)
(72) Inventor: BAE, Junhyeok, 18280 Hwaseong-si, Gyeonggi-do (KR); SHIN, Wonwoo, 18280 Hwaseong-si, Gyeonggi-do (KR); HWANG, YongWoo, 18280 Hwaseong-si, Gyeonggi-do (KR); PARK, Jongmin, 18280 Hwaseong-si, Gyeonggi-do (KR)
(74) Representative: Viering, Jentschura & Partner mbB Patent- und Rechtsanwälte

(56) References cited:
- CN-A- 110 788 530
- CN-U- 203 843 365

## Description

### BACKGROUND

### Technical Field

The present disclosure relates to a welding system and a welding method using the same, and more particularly, to a system and method for welding a battery module assembly for a vehicle.

### Background

As the demand for electric vehicles increases worldwide, there is also an increasing demand for facilities related to batteries mounted in the electric vehicles.

The electric vehicle uses, as a main power source, a battery in which a plurality of secondary battery cells, which is chargeable and dischargeable, is integrated into a single pack. Therefore, the electric vehicle releases no exhaust gas and causes very little noise.

In the case of the battery applied to the electric vehicle, a battery module assembly is configured by stacking a plurality of battery cells, and a battery pack assembly is configured by electrically connecting a plurality of battery module assemblies and mounted in the vehicle.

Various electrical components (e.g., a PCB, a BMS, a busbar, a clamp, and the like) are mounted in the battery pack assembly, and the electrical components are coupled to a battery module through a welding process.

In the welding process in the related art, welding facilities are installed for respective portions where the electrical components are welded to the battery pack assemblies along a conveyor by which the battery pack assemblies are conveyed in one direction (or, disposed in series). For example, CN 111 192 939 B discloses a lithium battery ear ultrasonic welding machine comprising a conveyor belt, a turning mechanism, a loading robot, a blanking robot and four ultrasonic welding machines.

Therefore, because expensive oscillators need to be provided for the respective welding facilities, there is a problem in that a large amount of costs is required to establish the welding facilities.

In addition, the battery pack assemblies are conveyed in series along the conveyor. Therefore, when one of the plurality of welding facilities disposed along the conveyor is broken down or needs to be cleaned, operations of all the welding facilities disposed along the conveyor need to be stopped.

The above information disclosed in this Background section is only for enhancement of understanding of the background of the disclosure, and therefore it may contain information that does not form the prior art that is already known in this country to a person of ordinary skill in the art.

### SUMMARY

In one aspect, the present invention has been made in an effort to provide a welding system according to claim and a welding method according to claim 11 using the same, which are capable of reducing a cycle time of a welding process and increasing an operation rate.

An embodiment of the present invention provides a welding system including:
a main conveyor configured to convey a battery palette on which a battery module assembly is mounted; at least two auxiliary conveyors disposed in parallel with the main conveyor; a loading-unloading module configured to transfer the battery palette to the auxiliary conveyor and/or transfer the battery palette from the auxiliary conveyor to the main conveyor; clamping jigs on which the battery palettes are seated by the loading-unloading module so that a preset welding process is performed on the auxiliary conveyors; and at least two welding robots configured to weld the battery module assemblies seated on the at least two auxiliary conveyors.

The loading-unloading module may be configured to transfer the battery palette, which is conveyed along the main conveyor, to the auxiliary conveyor and transfer the battery palette, which is completely subjected to the preset welding process, from the auxiliary conveyor to the main conveyor.

The auxiliary conveyor may include: a drive unit configured to generate power; a lead screw connected to a rotary shaft of the drive unit and gear-coupled to the battery palette; and an LM guide configured to guide the clamping jig.

The clamping jig may include: a support plate on which the battery module is seated; a first pressing jig configured to press, in a first direction, a welding object against the battery module assembly seated on the support plate; a second pressing jig configured to press, in a second direction, another welding object against the battery module assembly seated on the support plate; and a back-up jig configured to fix, in a third direction, the battery palette seated on the support plate.

The support plate may have a support pad and a support protrusion that set a direction and a position of the battery palette.

The welding system according to the embodiment of the present invention may further include a suction module provided on the clamping jig and configured to remove fume or spatters produced by the welding process.

The welding system according to the embodiment of the present invention may further include a saltwater container configured to extinguish a fire on the battery module assembly by means of the loading-unloading module when a temperature of the battery module assembly is a preset temperature or higher or when a fire occurs on the battery module assembly.

When any one of the at least two auxiliary conveyors is abnormal, a welding process may be performed on the battery module assembly by the other auxiliary conveyor.

The two welding robots may perform the welding process on the battery module assembly loaded onto the other auxiliary conveyor.

When any one of the at least two welding robots is abnormal, a welding process may be performed on the battery module assembly by the other welding robot.

In some embodiments, the at least two welding robots may comprise an oscillator configured to emit laser beams.

In some embodiments, the at least two welding robots may comprise a chiller configured to cool the oscillator.

In some embodiments, the welding system may further comprise a detection unit configured to detect a state information of the battery module assembly, a state information of the welder, a state information of the welding robot, and a state information of the auxiliary conveyor. The welding system may further comprise a controller, and the state information detected by the detection unit may be transmitted to the controller.

Another embodiment of the present invention provides a welding method using the welding system according to claim 1, the welding method including: determining whether the welding robot is normal; determining whether the auxiliary conveyor is normal; and welding the battery module assembly by using the welding robot and the auxiliary conveyor based on a state of the welding robot and a state of the auxiliary conveyor.

When the at least two welding robots and the at least two auxiliary conveyors are normal, the battery module assemblies on the at least two auxiliary conveyors may be welded.

When the at least two welding robots are normal and any one of the at least two auxiliary conveyors is abnormal, the normal two welding robots may weld the battery module assemblies on the normal auxiliary conveyor.

The welding method according to the embodiment of the present invention may further include determining whether the auxiliary conveyor disposed adjacent to the normal welding robot is normal when any one of the at least two welding robots is abnormal.

When the auxiliary conveyor disposed adjacent to the normal welding robot is normal, the normal welding robot may weld the battery module assembly on the normal auxiliary conveyor.

According to the welding system according to the embodiment of the present invention described above, the at least two auxiliary conveyors are disposed in parallel with the main conveyor. Therefore, even though any one auxiliary conveyor is abnormal, the remaining auxiliary conveyors may perform the welding process. Therefore, it is possible to increase the operation rate of the entire system for the welding process.

As discussed, the method and system suitably include use of a controller or processer.

### BRIEF DESCRIPTION OF THE DRAWINGS

Because the drawings are provided for reference to describe exemplary embodiments of the present invention, the scope of the invention should not be construed as being limited to the accompanying drawings.
FIG. 1 is a perspective view illustrating a configuration of a welding system according to an embodiment of the present invention.
FIG. 2 is a block diagram of the welding system according to the embodiment of the present invention.
FIG. 3 is a perspective view illustrating a configuration of an auxiliary conveyor according to the embodiment of the present invention.
FIGS. 4 and 5 are perspective views illustrating a configuration of a clamping jig according to the embodiment of the present invention.
FIGS. 6A to 6D are views for explaining operating states of the clamping jig according to the embodiment of the present invention.
FIG. 7 is a flowchart for explaining a method of welding a battery module assembly according to the embodiment of the present invention.

### DETAILED DESCRIPTION OF THE EMBODIMENTS

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

As used herein, the singular forms "a," "an" and "the" are intended to include the plural forms as well, unless the context clearly indicates otherwise. These terms are merely intended to distinguish one component from another component, and the terms do not limit the nature, sequence or order of the constituent components. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor and is specifically programmed to execute the processes described herein. The memory is configured to store the modules and the processor is specifically configured to execute said modules to perform one or more processes which are described further below.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

Embodiments of the present invention will be described in detail with reference to the accompanying drawings so that those with ordinary skill in the art to which the present disclosure pertains may easily carry out the embodiments. However, the present invention may be implemented in various different ways and is not limited to the embodiments described herein.

A part irrelevant to the description will be omitted to clearly describe the present invention, and the same or similar constituent elements will be designated by the same reference numerals throughout the specification.

In addition, the size and thickness of each component illustrated in the drawings are arbitrarily shown for ease of description, but the present disclosure is not limited thereto. In order to clearly describe several portions and regions, thicknesses thereof are enlarged.

Hereinafter, a welding system according to an embodiment of the present invention will be described in detail with reference to the accompanying drawings.

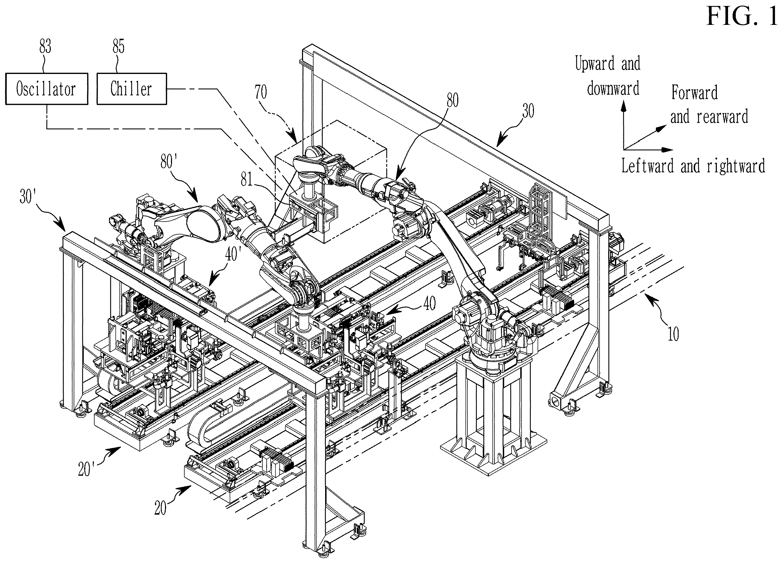

FIG. 1 is a perspective view illustrating a configuration of a welding system according to an embodiment of the present invention.

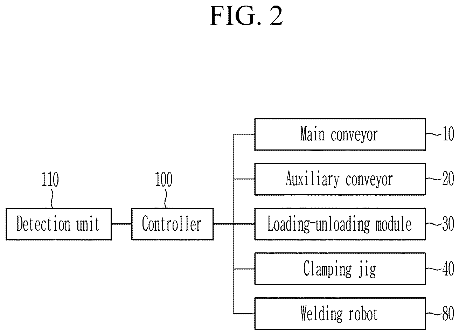

Further, FIG. 2 is a block diagram of the welding system according to the embodiment of the present invention.

As illustrated in FIGS. 1 and 2, a welding system according to an embodiment of the present invention may include: a main conveyor 10 configured to convey a battery module assembly (BMA); at least two auxiliary conveyors 20 disposed in parallel with the main conveyor 10; a loading-unloading module 30 configured to transfer the battery module assembly between the main conveyor 10 and the auxiliary conveyor 20; clamping jigs 40 configured to clamp and/or unclamp the battery module assembly; and at least two welding robots 80 configured to weld the battery module assembly.

The main conveyor 10 conveys the battery module assembly in a preset direction so that preset working processes (e.g., a process of stacking battery cells, a process of assembling the battery cells, a welding process, and the like) are performed. In this case, the battery module assembly is conveyed by the main conveyor 10 in a state in which the battery module assembly is mounted on a battery palette 90. Hereinafter, for the convenience of description, the battery palette 90 may include a state in which the battery module assembly is mounted on the battery palette 90.

The battery palette 90 is provided in the form of a plate on which the battery pack assembly 1 is seated. The battery palette 90 is seated on support pads 43 of a support plate 42 of the clamping jig 40 which will be described below. Two support holes 91 are formed in diagonal edge portions of the battery palette 90, and support protrusions 44 of the support plate 42 of the clamping jig 40, which will be described below, are inserted into the support holes 91. Back-up holes 93 are formed in a lateral surface of the battery palette 90, and back-up jigs 47 to be described below are inserted into the back-up holes 93.

The main conveyor 10 may include a belt operated by a main drive unit 21 (e.g., an electric motor) (not illustrated).

The at least two auxiliary conveyors 20 are provided in parallel with a conveyance direction of the battery module assembly mounted on the main conveyor 10. The two auxiliary conveyors 20 include a first auxiliary conveyor 20 and a second auxiliary conveyor 20. The auxiliary conveyor 20 relatively close to the main conveyor 10 is referred to as the first auxiliary conveyor 20, and the auxiliary conveyor 20 relatively distant from the main conveyor 10 is referred to as the second auxiliary conveyor 20. In the embodiment of the present disclosure, the example will be described in which the two auxiliary conveyors 20 are provided in parallel with the main conveyor 10. However, the protection scope of the present invention is not limited thereto. A detailed configuration of the auxiliary conveyor 20 will be described below.

The loading-unloading module 30 transfers the battery palette 90, which is conveyed along the main conveyor 10, to the auxiliary conveyor 20 and/or transfers the battery palette 90 from the auxiliary conveyor 20 to the main conveyor 10. For example, the loading-unloading module 30 transfers the battery palette 90, on which the battery module assembly, which is not subjected to the welding process, is mounted, from the main conveyor 10 to the auxiliary conveyor 20 or transfers the battery palette 90, on which the battery module assembly, which has been completely subjected to the welding process, is mounted, from the auxiliary conveyor 20 to the main conveyor 10. To this end, the loading-unloading module 30 may be implemented as a two-axis orthogonal robot. That is, the loading-unloading module 30 may operate in the conveyance direction of the main conveyor 10 and a direction perpendicular to the conveyance direction of the main conveyor 10.

The clamping jig 40 clamps (or fixes) the battery palette 90 mounted on the auxiliary conveyor 20. That is, the battery palette 90, which is transferred from the main conveyor 10 to the auxiliary conveyor 20 by the loading-unloading module 30, is seated on the clamping jig 40 so that the preset welding process is performed. A detailed configuration of the clamping jig 40 will be described below. The clamping jig 40 may be conveyed along the auxiliary conveyor 20, as necessary.

The at least two welding robots 80 are provided adjacent to the two auxiliary conveyors 20. The two welding robots 80 include a first welding robot 80 disposed adjacent to the first auxiliary conveyor 20, and a second welding robot 80 disposed adjacent to the second auxiliary conveyor 20. In the embodiment of the present disclosure, the two auxiliary conveyors 20 are disposed adjacent to each other in parallel, the first welding robot 80 is disposed adjacent to the first auxiliary conveyor 20, and the second welding robot 80 is disposed adjacent to the second auxiliary conveyor.

A welder 81 mounted at an end of the welding robot 80 welds the battery module assembly mounted on the battery palette 90 seated on the clamping jig 40. To this end, the welding robot 80 may be implemented as a six-axis articulated robot. The welding robot 80 may be implemented as the six-axis articulated robot and weld a front surface, a rear surface, a left surface, and a right surface of the battery module assembly. Further, the welder 81 may include an oscillator 83 configured to emit laser beams, and a chiller 85 configured to cool the oscillator 83.

The welding system according to the embodiment of the present invention may include a controller 100 configured to control operations of the main conveyor 10, the auxiliary conveyors 20, the loading-unloading module 30, the clamping jigs 40, and the welding robots 80.

The controller 100 may be implemented as a manufacturing execution system (MES). The controller 100 collects information on states (e.g., welding portions, positions of the battery module assemblies, and the like) of the battery module assemblies, information on states (e.g., normal or abnormal states) of the welders 81, information on states (e.g., normal or abnormal states of the welding robots 80) of the welding robots 80, and information on states (e.g., normal states of the auxiliary conveyors 20, stand-by states for facility inspection, or abnormal states) of the auxiliary conveyors 20. The controller 100 instructs the welding robot 80 to perform the welding process on the battery module assembly based on the collected state information. The controller 100 may control the main conveyor 10, the auxiliary conveyors 20, the loading-unloading module 30, the clamping jigs 40, and the welding robots 80 by using a programmable logic controller (PLC).

To this end, the welding system according to the embodiment of the present disclosure invention may include a detection unit 110 configured to detect the state information of the battery module assembly, the state information of the welder 81, the state information of the welding robot 80, and the state information of the auxiliary conveyor 20. The state information detected by the detection unit 110 is transmitted to the controller 100.

The state information of the battery module assembly includes information on the welding portion of the battery module assembly. The state information of the welders 81 includes normal operating states and abnormal operating states of the plurality of welders 81. The state information of the welding robot 80 includes normal operating states and abnormal operating states of the plurality of welding robots 80. The state information of the auxiliary conveyors 20 include normal operating states and abnormal operating states of the plurality of auxiliary conveyors 20.

The controller 100 may include one or more processors configured to be operated by a preset program, and the preset program performs respective steps of a method of controlling a vehicle having a motor according to the embodiment of the present disclosure.

The welding system according to the embodiment of the present invention may include a saltwater container 70 configured to extinguish a fire on the battery module assembly due to an abnormal situation (e.g., heating of the battery module assembly and/or a fire on the battery module assembly) by means of the loading-unloading module 30.

Hereinafter, the configuration of the auxiliary conveyor 20 according to the embodiment of the present invention will be described in detail with reference to the accompanying drawings.

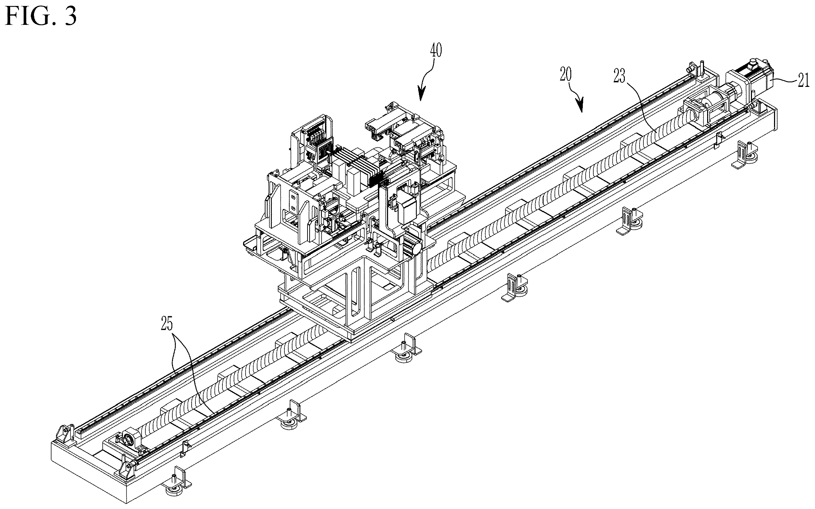

FIG. 3 is a perspective view illustrating the configuration of the auxiliary conveyor according to the embodiment of the present invention.

Referring to FIG. 3, the auxiliary conveyor 20 includes the drive unit 21 configured to generate power, a lead screw 23 connected to a rotary shaft of the drive unit 21, and a pair of LM guides 25 configured to guide the clamping jig 40.

The drive unit 21 may be a servo motor for generating power and disposed between the pair of LM guides 25.

The lead screw 23 (or a ball screw) may be integrally connected to the rotary shaft of the drive unit 21 and screw-coupled to a movable plate 41 (to be described below) of the clamping jig 40.

When the lead screw 23 is rotated by power of the drive unit 21, the clamping jig 40 screw-coupled to the lead screw 23 moves in a forward/rearward direction in an axial direction of the lead screw 23.

The pair of LM guides 25 is provided to guide the movement of the movable plate 41 of the clamping jig 40.

Next, the configuration of the clamping jig 40 according to the embodiment of the present invention will be described in detail with reference to the accompanying drawings.

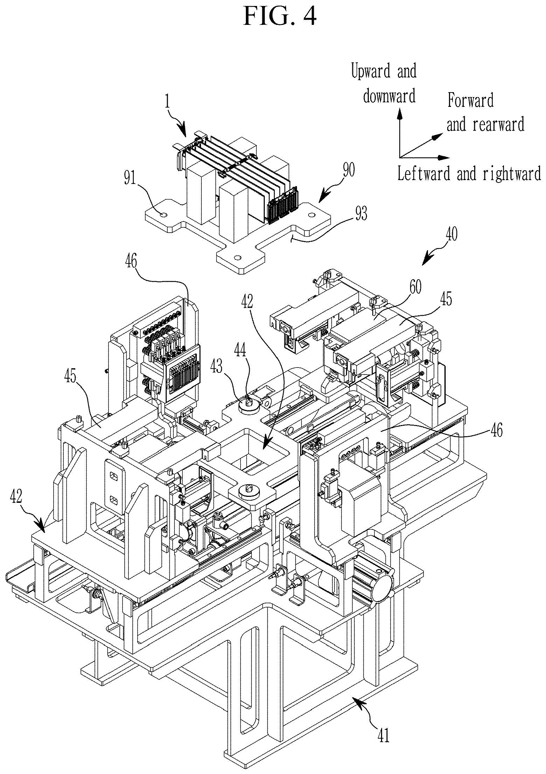

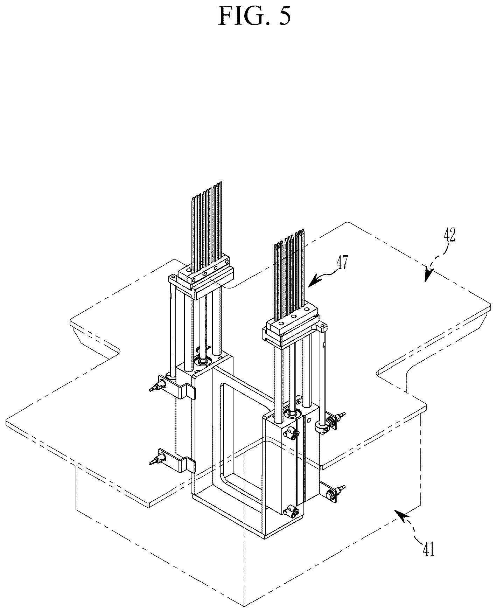

FIGS. 4 and 5 are perspective views illustrating the configuration of the clamping jig according to the embodiment of the present invention. For the convenience of understanding, FIG. 5 illustrates the clamping jig 40 from which some constituent elements are eliminated.

Referring to FIGS. 4 and 5, the clamping jig 40 includes the movable plate 41, the support plate 42 disposed above the movable plate 41, a pair of first pressing jigs 45 disposed to be movable in a forward/rearward direction of the support plate 42, the back-up jigs 47 disposed on a lateral surface of the support plate 42 and configured to be movable in an upward/downward direction, and a pair of second pressing jigs 46 disposed to be movable in a leftward/rightward direction of the support plate 42.

A central lower portion of the movable plate 41 is screw-coupled to the lead screw 23 of the auxiliary conveyor 20. When power is generated by the drive unit 21, the movable plate 41 is moved in the movement direction of the auxiliary conveyor 20 (e.g., in the forward/rearward direction) by the rotation of the lead screw 23. In this case, because lower portions of two opposite sides of the movable plate are guided by the LM guides 25, the stable movement of the movable plate 41 in the forward/rearward direction is ensured.

The support plate 42 disposed above the movable plate 41 is a portion on which the battery palette 90, on which the battery module assembly, is mounted is seated. A plurality of support pads 43 and a plurality of support protrusions 44 are formed on the upper surface of the support plate 42 to position the battery palette 90 at the accurate position.

A bottom surface of the battery palette 90 is seated on the plurality of support pads 43 formed on the upper surface of the support plate 42, such that a position of the battery palette 90 in a height direction may be accurately set. In the embodiment of the present invention, four support pads 43 may be respectively formed at edges of the support plate 42.

The support protrusion 44 may protrude upward from the support pad 43 formed on the support plate 42. In the embodiment of the present invention, a pair of support protrusions 44 may be formed in a diagonal direction of the support plate 42. The support holes 91 (or support grooves) (not illustrated) corresponding to the support protrusions 44 may be formed in the battery palette 90.

The pair of first pressing jigs 45 presses, in a first direction (e.g., the forward/rearward direction), a welding object (e.g., front and rear clamping devices for welding busbars and the like to front and rear sides of the battery module assembly) against the battery module assembly on the battery palette 90 seated on the support plate 42. To this end, the pair of first pressing jigs 45 is movably provided on an upper portion of the movable plate 41 (or disposed at front and rear sides of the support plate 42). The pair of first pressing jigs 45 may be moved in the forward/rearward direction by power generated by a first cylinder. The first cylinder may be implemented as a hydraulic cylinder or a pneumatic cylinder.

The pair of second pressing jigs 46 presses, in a second direction (e.g., the leftward/rightward direction), a welding object (e.g., left and right clamping devices for welding busbars and the like to left and right sides of the battery module assembly) against the battery module assembly of the battery palette 90 seated on the support plate 42. To this end, the pair of second pressing jigs 46 is movably provided on the upper portion of the movable plate 41 (or disposed at the front and rear sides of the support plate 42). The pair of second pressing jigs 46 may be moved in the leftward/rightward direction by power generated by a second cylinder. The second cylinder may be implemented as a hydraulic cylinder or a pneumatic cylinder.

The back-up jigs 47 fix the battery palette 90 to stably restrain the battery palette 90 seated on the support plate 42. To this end, the back-up jigs 47 are provided on the movable plate 41 and configured to be movable in the upward/downward direction. The back-up jigs 47 may be moved in the upward/downward direction by power generated by a back-up cylinder. The back-up cylinder may be implemented as a hydraulic cylinder or a pneumatic cylinder. The back-up holes 93 corresponding to the back-up jigs 47 are formed in the battery palette 90, and the back-up jigs 47 are inserted into the back-up holes 93, such that the battery palette 90 may be fixed.

Meanwhile, a suction module 60 may be provided on the clamping jig 40 and suck foreign substances (e.g., fume and/or spatters) produced during the welding process. Because the suction module 60 sucks foreign substances produced during the welding process, it is possible to reduce the time required to clean and/or repair the auxiliary conveyor 20 and the clamping jig 40.

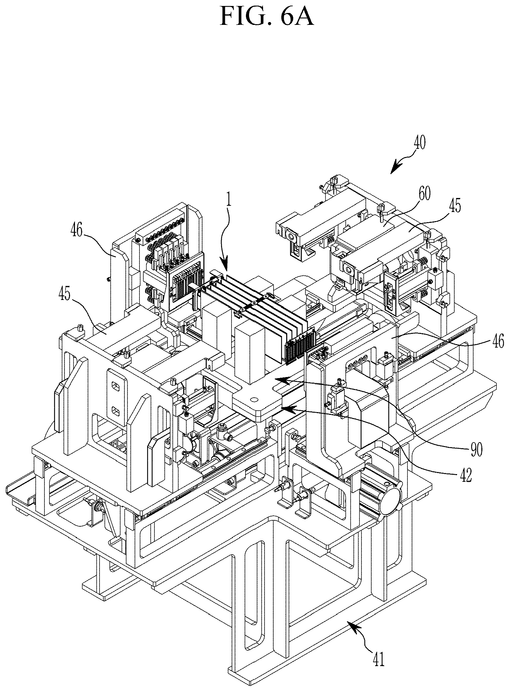

FIGS. 6A to 6D are views for explaining operating states of the clamping jig according to the embodiment of the present invention.

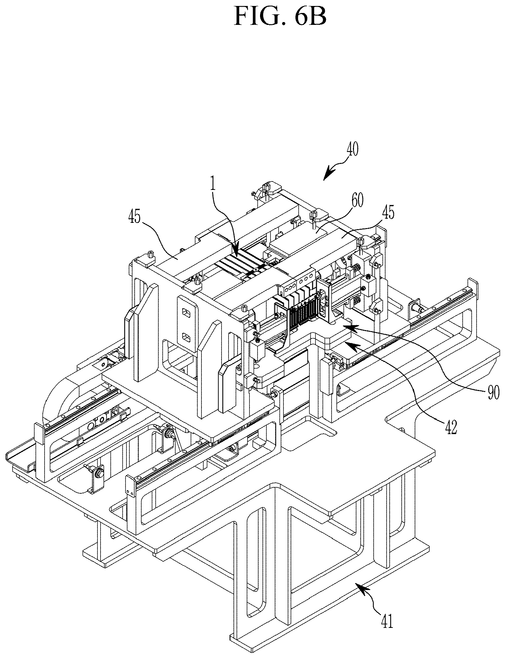

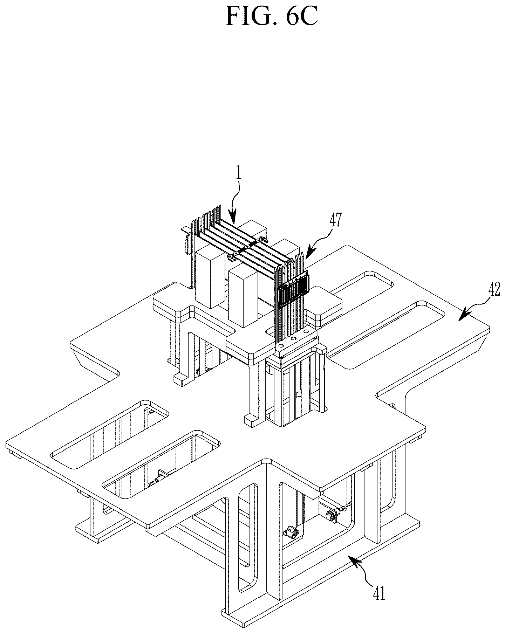

For the convenience of understanding, FIG. 6B illustrates a state in which the second pressing jig 46 and the back-up jig 47 are eliminated, and FIG. 6C illustrates a state in which the first pressing jig 45 and the second pressing jig 46 are eliminated.

Referring to FIGS. 6A to 6D, the battery palette 90 is seated on the support plate 42 of the clamping jig 40 by the loading-unloading module 30. In this case, a lower surface of the battery palette 90 is seated on the support pad 43 of the support plate 42. Therefore, the position of the battery palette 90 in the upward/downward direction is accurately set. Further, the support protrusion 44 of the support plate 42 is inserted into the support hole 91 of the battery palette 90 when the battery palette 90 is seated on the support plate 42. Therefore, the position of the battery palette 90 in the forward/rearward direction and the leftward/rightward direction is accurately set (see FIG. 6A).

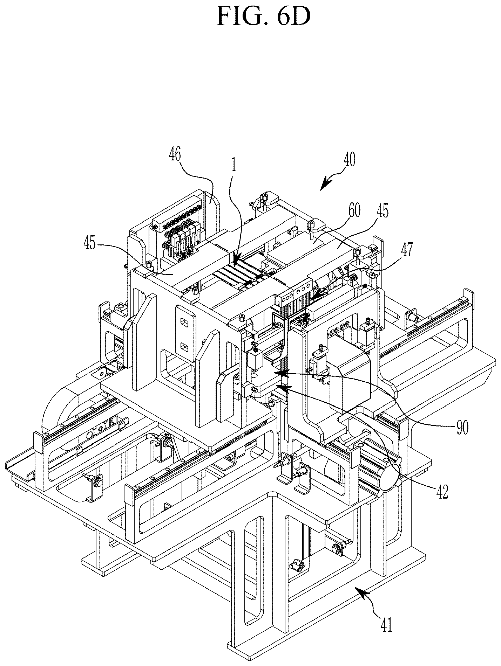

When the battery palette 90 is accurately seated on the support plate 42, the welding object is supported on the front and rear surfaces of the battery module assembly by the first pressing jigs 45 (see FIG. 6B). Further, the battery palette 90 is fixedly supported on the support plate 42 by the back-up jigs 47 (see FIG. 6C). Thereafter, the welding object is supported on the left and right surfaces of the battery module assembly by the second pressing jigs 46 (see FIG. 6D).

Because the welding object is clamped in a lump on the welding portion of the battery module assembly by the clamping jig 40 as described above, it is possible to reduce the cycle time of the welding process and ensure uniform welding quality.

Hereinafter, a method of welding a battery module assembly according to the embodiment of the present invention will be described in detail with reference to the accompanying drawings.

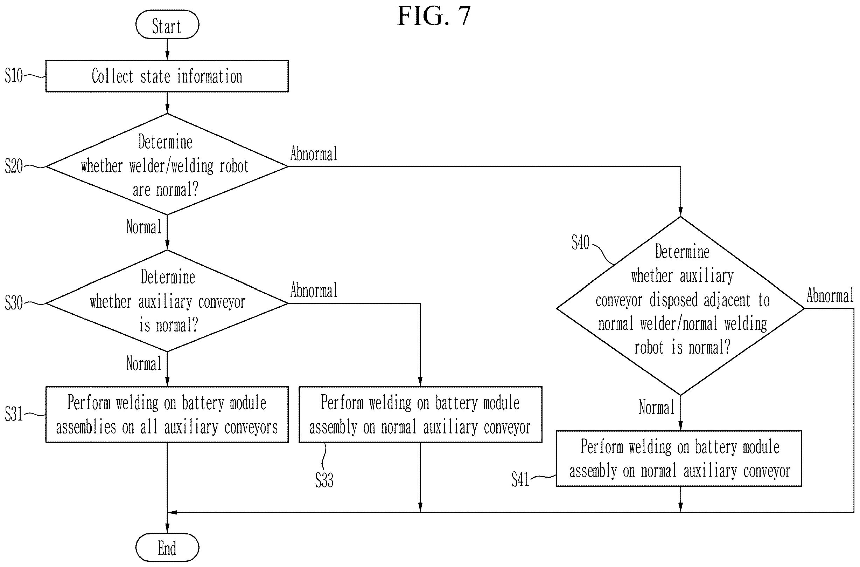

FIG. 7 is a flowchart for explaining a method of welding a battery module assembly according to the embodiment of the present invention.

Referring to FIG. 7, the controller 100 uses the detection unit 110 and collects the state information of the battery module assembly, the state information of the welder 81, the state information of the welding robot 80, and the state information of the auxiliary conveyor 20 (S10).

The controller 100 determines whether the welders 81 and the welding robots 80 provided on the auxiliary conveyors 20 are normal (S20).

When the welders 81 and the welding robots 80 are normal in step S20, the controller 100 instructs the two welding robots 80 to perform welding on the battery module assemblies (S21).

The controller 100 determines whether the two auxiliary conveyors 20 are normal (S30).

When both the two auxiliary conveyors 20 are normal in step S30, the controller 100 performs welding on the battery module assemblies on both the auxiliary conveyors 20 by using the normal welders 81 and the normal welding robots 80 (S31).

That is, the controller 100 allows the loading-unloading module 30 to seat the battery palettes 90, on which the battery module assemblies being conveyed along the main conveyor 10 are seated, on the clamping jigs 40 of the auxiliary conveyors 20. The controller 100 allows the clamping jig 40 to temporarily support the welding object by pressing the welding object against the welding portion of the battery module assembly. Further, the controller 100 allows the two welding robots 80 to perform welding on the battery module assemblies seated on the clamping jigs 40 of the auxiliary conveyors 20. In this case, because the welding is performed on the battery module assemblies by the two welding robots 80, it is possible to reduce the cycle time of the welding process.

In step S30, when any one of the two auxiliary conveyors 20 (e.g., the first auxiliary conveyor 20) is abnormal, the controller 100 performs welding on the battery module assembly on the normal auxiliary conveyor 20 (S33).

That is, the controller 100 allows the loading-unloading module 30 to seat the battery palettes 90, on which the battery module assemblies being conveyed along the main conveyor 10 are seated, on the clamping jig 40 of the other auxiliary conveyor 20 (e.g., the second auxiliary conveyor 20). The controller 100 allows the clamping jig 40 to temporarily support the welding object by pressing the welding object against the welding portion of the battery module assembly. The controller 100 allows the welding robot 80 to weld the welding object to the battery module assembly seated on the clamping jig 40 of the auxiliary conveyor 20.

As described above, when any one of the two auxiliary conveyors 20 is being broken down or repaired and thus in an abnormal state, the other auxiliary conveyor 20 performs the welding process on the battery module assembly, which makes it possible to increase an operation rate of a welding line.

Meanwhile, when any one of the two welding robots 80 or any one of the two welders 81 is abnormal in step S20, the controller 100 determines whether the auxiliary conveyor 20 disposed adjacent to the other welding robot 80 is normal (S40).

If the auxiliary conveyor 20 disposed adjacent to the other welding robot 80 is abnormal, the controller 100 stops the process without performing the welding process on the battery module assembly.

When the auxiliary conveyor 20 disposed adjacent to the other welding robot 80 is normal in step S40, the controller 100 performs welding on the battery module assembly on the auxiliary conveyor 20 disposed adjacent to the normal welder 81 and the normal welding robot 80 (S41).

That is, the controller 100 allows the loading-unloading module 30 to seat the battery palettes 90, on which the battery module assemblies being conveyed along the main conveyor 10 are seated, on the clamping jig 40 of the auxiliary conveyor 20 disposed adjacent to the normal welding robot 80. The controller 100 allows the clamping jig 40 to temporarily support the welding object by pressing the welding object against the welding portion of the battery module assembly. Further, the controller 100 allows the single welding robot 80 to perform welding on the battery module assembly seated on the clamping jig 40 of the auxiliary conveyor 20.

According to the welding system and the welding method using the same according to the embodiment of the present invention described above, the welding objects are welded to the battery module assemblies by the two auxiliary conveyors 20 disposed in parallel and the two welding robots 80 disposed adjacent to the two auxiliary conveyors 20. Therefore, it is possible to reduce the cycle time required for the process of welding the battery module assembly.

In addition, when any one of the two auxiliary conveyors 20 is abnormal (e.g., when the auxiliary conveyor is being broken down, repaired, and/or cleaned), the welding process may be performed on the battery module assembly by the other auxiliary conveyor 20, which makes it possible to increase an operation rate of the entire welding system.

Likewise, when any one of the two welding robots 80 (or the two welders 81) is abnormal (e.g., when the welding robot 80 is broken down), the welding process may be performed on the battery module assembly by the other welding robot 80, which makes it possible to increase an operation rate of the entire welding system.

Because the welding object is supported in a lump on the battery module assembly by the clamping jig 40, it is possible to reduce the cycle time of the welding process and ensure uniform welding quality.

While the example has been above described in which the welding system according to the embodiment of the present invention is applied to the process of welding the battery module assembly, the protection scope of the present invention is not limited thereto. As necessary, the welding system according to the embodiment of the present invention may be applied to a process of welding a stator of a hairpin motor.

While the embodiments of the present invention have been described above, the present invention is not limited thereto, and various modifications can be made and carried out within the scope of the claims.

### <Description of symbols>

1: Battery pack assembly
10: Main conveyor
20: Auxiliary conveyor
21: Drive unit
23: Lead screw
25: LM guide
30: Loading-unloading module
40: Clamping jig
41: Movable plate
42: Support plate
43: Support pad
44: Support protrusion
45: First pressing jig
46: Second pressing jig
47: Back-up jig
60: Suction module
70: Saltwater container
80: Welding robot
81: Welder
83: Oscillator
85: Chiller
90: Battery palette
91: Support hole
93: Back-up hole
100: Controller
110: Detection unit

## Claims

1. A welding system comprising:
a main conveyor (10) configured to convey a battery palette (90) on which a battery module assembly (BMA) is mounted;
at least two auxiliary conveyors (20) disposed in parallel with the main conveyor (10);
a loading-unloading module (30) configured to transfer the battery palette (90) to the auxiliary conveyor (20) and/or transfer the battery palette (90) from the auxiliary conveyor (20) to the main conveyor (10);
clamping jigs (40) on which the battery palettes (90) are seated whereby a welding process can be performed on the auxiliary conveyors (20); and
at least two welding robots (80) configured to weld the battery module assemblies (BMA) seated on the at least two auxiliary conveyors (20).

2. The welding system of claim 1, wherein the loading-unloading module (30) is configured to transfer the battery palette (90), which is conveyed along the main conveyor (10), to the auxiliary conveyor (20) and/or transfer the battery palette (90), which is completely subjected to the preset welding process, from the auxiliary conveyor (20) to the main conveyor (10).

3. The welding system of claim 1 or 2, wherein the auxiliary conveyor (20) comprises:
a drive unit (21) configured to generate power;
a lead screw (23) connected to a rotary shaft of the drive unit (21) and gear-coupled to the battery palette (90); and
an LM guide configured to guide the clamping jig (40).

4. The welding system of one of claims 1-3, wherein the clamping jig (40) comprises:
a support plate (42) on which the battery palette (90) is seated;
a first pressing jig (45) configured to press, in a first direction, a welding object against the battery module assembly (BMA) seated on the support plate (42);
a second pressing jig (46) configured to press, in a second direction, another welding object against the battery module assembly (MBA) seated on the support plate (42); and
a back-up jig (47) configured to fix, in a third direction, the battery palette (90) seated on the support plate (42).

5. The welding system of claim 4, wherein the support plate (42) comprises a support pad (43) and a support protrusion (44) that set a direction and a position of the battery palette (90).

6. The welding system of claim 4 or 5, further comprising:
a suction module (60) provided on the clamping jig (40) and configured to remove fume or spatters produced by the welding process.

7. The welding system of one of claims 1-6, further comprising:
a saltwater container (70) configured to extinguish a fire on the battery module assembly (BMA) by means of the loading-unloading module (30) when a temperature of the battery module assembly (BMA) is a preset temperature or higher or when a fire occurs on the battery module assembly (BMA).

8. The welding system of one of claims 1-7, wherein:
when any one of the at least two auxiliary conveyors (20) is abnormal, a welding process is performed on the battery module assembly (BMA) by the other auxiliary conveyor (20).

9. The welding system of claim 8, wherein:
the two welding robots (80) perform the welding process on the battery module assembly (BMA) loaded onto the other auxiliary conveyor (20).

10. The welding system of one of claims 1-9, wherein:
when any one of the at least two welding robots (80) is abnormal, a welding process is performed on the battery module assembly (BMA) by the other welding robot (80).

11. A welding method using the welding system according to one of claims 1-10, the welding method comprising:
determining whether the welding robot (80) is normal;
determining whether the auxiliary conveyor (20) is normal; and
welding the battery module assembly (BMA) by using the welding robot (80) and the auxiliary conveyor (20) based on a state of the welding robot (80) and a state of the auxiliary conveyor (20).

12. The welding method of claim 11, wherein:
when the at least two welding robots (80) and the at least two auxiliary conveyors (20) are normal, the battery module assemblies (BMA) on the at least two auxiliary conveyors (20) are welded.

13. The welding method of claim 11 or 12, wherein:
when the at least two welding robots (80) are normal and any one of the at least two auxiliary conveyors (20) is abnormal, the normal two welding robots (80) weld the battery module assemblies (BMA) on the normal auxiliary conveyor (20).

14. The welding method of one of claims 11-13, further comprising:
determining whether the auxiliary conveyor (20) disposed adjacent to the normal welding robot (80) is normal when any one of the at least two welding robots (80) is abnormal.

15. The welding method of claim 14, wherein:
when the auxiliary conveyor (20) disposed adjacent to the normal welding robot (80) is normal, the normal welding robot (80) welds the battery module assembly (BMA) on the normal auxiliary conveyor (20).

## Patentansprüche

1. Schweißsystem, aufweisend:
einen Hauptförderer (10), der konfiguriert ist, um eine Batteriepalette (90) zu befördern, auf der eine Batteriemodulbaugruppe (BMA) montiert ist,
mindestens zwei Hilfsförderer (20), die parallel zu dem Hauptförderer (10) angeordnet sind,
ein Lade-Entlademodul (30), das konfiguriert ist, um die Batteriepalette (90) zum Hilfsförderer (20) zu übertragen und/oder die Batteriepalette (90) vom Hilfsförderer (20) zum Hauptförderer (10) zu übertragen,
Spanneinrichtungen (40), auf die die Batteriepaletten (90) gesetzt sind, wodurch ein Schweißvorgang auf den Hilfsförderern (20) durchgeführt werden kann, und
mindestens zwei Schweißroboter (80), die konfiguriert sind, um die Batteriemodulbaugruppen (BMA) zu schweißen, die auf die mindestens zwei Hilfsförderer (20) gesetzt sind.

2. Schweißsystem gemäß Anspruch 1, wobei das Lade-Entlademodul (30) konfiguriert ist, um die Batteriepalette (90), die entlang des Hauptförderers (10) befördert wird, an den Hilfsförderer (20) zu übertragen und/oder die Batteriepalette (90), die vollständig dem voreingestellten Schweißvorgang unterzogen wird, vom Hilfsförderer (20) zum Hauptförderer (10) zu übertragen.

3. Schweißsystem gemäß Anspruch 1 oder 2, wobei der Hilfsförderer (20) aufweist:
eine Antriebseinheit (21), die konfiguriert ist, um Leistung zu erzeugen,
eine Leitspindel (23), die mit einer Drehwelle der Antriebseinheit (21) verbunden ist und mit der Batteriepalette (90) getriebeverbunden ist, und
eine LM-Führung, die konfiguriert ist, um die Spanneinrichtung (40) zu führen.

4. Schweißsystem gemäß einem der Ansprüche 1 bis 3, wobei die Spanneinrichtung (40) aufweist:
eine Stützplatte (42), auf die die Batteriepalette (90) gesetzt ist,
eine erste Pressvorrichtung (45), die konfiguriert ist, um ein Schweißobjekt in einer ersten Richtung gegen die auf die Stützplatte (42) gesetzte Batteriemodulbaugruppe (BMA) zu pressen,
eine zweite Pressvorrichtung (46), die konfiguriert ist, um ein anderes Schweißobjekt in einer zweiten Richtung gegen die auf die Stützplatte (42) gesetzte Batteriemodulbaugruppe (MBA) zu pressen, und
eine Sicherungsvorrichtung (47), die konfiguriert ist, um in einer dritten Richtung die auf die Stützplatte (42) gesetzte Batteriepalette (90) zu fixieren.

5. Schweißsystem gemäß Anspruch 4, wobei die Stützplatte (42) ein Stützpad (43) und einen Stützvorsprung (44) aufweist, die eine Richtung und eine Position der Batteriepalette (90) festlegen.

6. Schweißsystem gemäß Anspruch 4 oder 5, ferner aufweisend:
ein Saugmodul (60), das an der Spanneinrichtung (40) vorgesehen ist und konfiguriert ist, um Rauch oder Spritzer zu entfernen, die durch den Schweißvorgang erzeugt werden.

7. Schweißsystem gemäß einem der Ansprüche 1 bis 6, ferner aufweisend:
einen Salzwasserbehälter (70), der konfiguriert ist, um ein Feuer an der Batteriemodulbaugruppe (BMA) mittels des Lade-Entlademoduls (30) zu löschen, wenn eine Temperatur der Batteriemodulbaugruppe (BMA) eine vorbestimmte Temperatur oder höher ist oder wenn ein Feuer an der Batteriemodulbaugruppe (BMA) auftritt.

8. Schweißsystem gemäß einem der Ansprüche 1 bis 7, wobei:
wenn irgendeiner der mindestens zwei Hilfsförderer (20) nicht normal ist, ein Schweißvorgang an der Batteriemodulbaugruppe (BMA) durch den anderen Hilfsförderer (20) durchgeführt wird.

9. Schweißsystem gemäß Anspruch 8, wobei:
die beiden Schweißroboter (80) den Schweißvorgang an der Batteriemodulbaugruppe (BMA) durchführen, die auf den anderen Hilfsförderer (20) geladen ist.

10. Schweißsystem gemäß einem der Ansprüche 1 bis 9, wobei:
wenn irgendeiner der mindestens zwei Schweißroboter (80) nicht normal ist, ein Schweißvorgang an der Batteriemodulbaugruppe (BMA) durch den anderen Schweißroboter (80) durchgeführt wird.

11. Schweißverfahren mittels des Schweißsystems gemäß einem der Ansprüche 1 bis 10, wobei das Schweißverfahren aufweist:
Ermitteln, ob der Schweißroboter (80) normal ist,
Ermitteln, ob der Hilfsförderer (20) normal ist, und
Schweißen der Batteriemodulbaugruppe (BMA) mittels des Schweißroboters (80) und des Hilfsförderers (20) basierend auf einem Zustand des Schweißroboters (80) und einem Zustand des Hilfsförderers (20).

12. Schweißverfahren gemäß Anspruch 11, wobei:
wenn die mindestens zwei Schweißroboter (80) und die mindestens zwei Hilfsförderer (20) normal sind, die Batteriemodulbaugruppen (BMA) auf den mindestens zwei Hilfsförderern (20) geschweißt werden.

13. Schweißverfahren gemäß Anspruch 11 oder 12, wobei:
wenn die mindestens zwei Schweißroboter (80) normal sind und irgendeiner der mindestens zwei Hilfsförderer (20) nicht normal ist, die normalen zwei Schweißroboter (80) die Batteriemodulbaugruppen (BMA) auf dem normalen Hilfsförderer (20) schweißen.

14. Schweißverfahren gemäß einem der Ansprüche 11 bis 13, ferner aufweisend:
Ermitteln, ob der benachbart zu dem normalen Schweißroboter (80) angeordnete Hilfsförderer (20) normal ist, wenn irgendeiner der mindestens zwei Schweißroboter (80) nicht normal ist.

15. Schweißverfahren gemäß Anspruch 14, wobei:
wenn der benachbart zum normalen Schweißroboter (80) angeordnete Hilfsförderer (20) normal ist, der normale Schweißroboter (80) die Batteriemodulbaugruppe (BMA) auf dem normalen Hilfsförderer (20) schweißt.

## Revendications

1. Système de soudage, comprenant :
un convoyeur principal (10) configuré pour transporter une palette de batterie (90) sur laquelle est monté un ensemble de module de batterie (BMA) ;
au moins deux convoyeurs auxiliaires (20) disposés en parallèle avec le convoyeur principal (10) ;
un module de chargement-déchargement (30) configuré pour transférer la palette de batterie (90) vers le convoyeur auxiliaire (20) et/ou transférer la palette de batterie (90) du convoyeur auxiliaire (20) vers le convoyeur principal (10) ;
des dispositifs de serrage (40) sur lesquels les palettes de batterie (90) sont placées, ce qui permet d'effectuer un processus de soudage sur les convoyeurs auxiliaires (20) ; et
au moins deux robots de soudage (80) configurés pour souder les ensembles de module de batterie (BMA) placés sur les au moins deux convoyeurs auxiliaires (20).

2. Système de soudage selon la revendication 1, dans lequel le module de chargement-déchargement (30) est configuré pour transférer la palette de batterie (90), qui est transportée le long du convoyeur principal (10), vers le convoyeur auxiliaire (20) et/ou transférer la palette de batterie (90), qui est entièrement soumise au processus de soudage prédéfini, du convoyeur auxiliaire (10) vers le convoyeur principal (10).

3. Système de soudage selon la revendication 1 ou 2, dans lequel le convoyeur auxiliaire (20) comprend :
une unité d'entraînement (21) configurée pour générer de la puissance ;
une vis-mère (23) reliée à un arbre rotatif de l'unité d'entraînement (21) et couplée par engrenage à la palette de batterie (90) ; et
un guide LM configuré pour guider le dispositif de serrage (40).

4. Système de soudage selon l'une des revendications 1 à 3, dans lequel le dispositif de serrage (40) comprend :
une plaque de support (42) sur laquelle est posée la palette de batterie (90) ;
un premier dispositif de pressage (45) configuré pour presser, dans une première direction, un objet de soudage contre l'ensemble de module de batterie (BMA) posé sur la plaque de support (42) ;
un deuxième dispositif de pressage (46) configuré pour presser, dans une deuxième direction, un autre objet de soudage contre l'ensemble de module de batterie (MBA) posé sur la plaque de support (42) ; et
un dispositif de sécurisation (47) configuré pour fixer, dans une troisième direction, la palette de batterie (90) posée sur la plaque de support (42).

5. Système de soudage selon la revendication 4, dans lequel la plaque de support (42) comprend un tampon de support (43) et une saillie de support (44) qui fixent une direction et une position de la palette de batterie (90).

6. Système de soudage selon la revendication 4 ou 5, comprenant en outre :
un module d'aspiration (60) prévu sur le dispositif de serrage (40) et configuré pour éliminer des fumées ou des éclaboussures produites par le processus de soudage.

7. Système de soudage selon l'une des revendications 1 à 6, comprenant en outre :
un réservoir d'eau salée (70) configuré pour éteindre un incendie sur l'ensemble de module de batterie (BMA) au moyen du module de chargement-déchargement (30) lorsqu'une température de l'ensemble de module de batterie (BMA) est une température prédéfinie ou supérieure ou lorsqu'un incendie se produit sur l'ensemble de module de batterie (BMA).

8. Système de soudage selon l'une des revendications 1 à 7, dans lequel :
lorsque l'un quelconque des au moins deux convoyeurs auxiliaires (20) est anormal, un processus de soudage est effectué sur l'ensemble de module de batterie (BMA) par l'autre convoyeur auxiliaire (20).

9. Système de soudage selon la revendication 8, dans lequel :
les deux robots de soudage (80) effectuent le processus de soudage sur l'ensemble de module de batterie (BMA) chargé sur l'autre convoyeur auxiliaire (20).

10. Système de soudage selon l'une des revendications 1 à 9, dans lequel :
lorsque l'un quelconque des au moins deux robots de soudage (80) est anormal, un processus de soudage est effectué sur l'ensemble de module de batterie (BMA) par l'autre robot de soudage (80).

11. Procédé de soudage utilisant le système de soudage selon l'une des revendications 1 à 10, le procédé de soudage comprenant :
déterminer si le robot de soudage (80) est normal ;
déterminer si le convoyeur auxiliaire (20) est normal ; et
souder l'ensemble de module de batterie (BMA) en utilisant le robot de soudage (80) et le convoyeur auxiliaire (20) en fonction d'un état du robot de soudage (80) et d'un état du convoyeur auxiliaire (20).

12. Procédé de soudage selon la revendication 11, dans lequel :
lorsque les au moins deux robots de soudage (80) et les au moins deux convoyeurs auxiliaires (20) sont normaux, les ensembles de module de batterie (BMA) sur les au moins deux convoyeurs auxiliaires (20) sont soudés.

13. Procédé de soudage selon la revendication 11 ou 12, dans lequel :
lorsque les au moins deux robots de soudage (80) sont normaux et que l'un quelconque des au moins deux convoyeurs auxiliaires (20) est anormal, les deux robots de soudage normaux (80) soudent les ensembles de module de batterie (BMA) sur le convoyeur auxiliaire (20) normal.

14. Procédé de soudage selon l'une des revendications 11 à 13, comprenant en outre :
déterminer si le convoyeur auxiliaire (20) disposé adjacent au robot de soudage (80) normal est normal lorsque l'un quelconque des au moins deux robots de soudage (80) est anormal.

15. Procédé de soudage selon la revendication 14, dans lequel :
lorsque le convoyeur auxiliaire (20) disposé adjacent au robot de soudage (80) normal est normal, le robot de soudage (80) normal soude l'ensemble de module de batterie (BMA) sur le convoyeur auxiliaire (20) normal.
